# EUROPÄISCHE PATENTSCHRIFT

(11) **EP 0 933 587 B1**
(45) Veröffentlichungstag und Bekanntmachung des Hinweises auf die Patenterteilung: **12.07.2006**
(21) Anmeldenummer: 99101361.6
(22) Anmeldetag: 26.01.1999
(51) Int. Cl.: F21S 13/00, B60Q 1/00, B60Q 1/26

(54) **Stabförmiger Lichtleiter**
Rod-shaped light guide
Guide de lumière en forme de barre

(30) Priorität: 30.01.1998 DE 19803518
(43) Veröffentlichungstag der Anmeldung: 04.08.1999
(73) Patentinhaber: Hella KGaA Hueck & Co., 59552 Lippstadt (DE)
(72) Erfinder: Decker, Detlef, 59558 Lippstadt (DE); Ruths, Torsten Dr., 59557 Lippstadt (DE)

(56) Entgegenhaltungen:
- DE-A- 3 123 369
- US-A- 5 590 945

## Beschreibung

Die Erfindung betrifft einen stabförmigen Lichtleiter für eine Beleuchtungseinrichtung für Kraftfahrzeuge mit mindestens einer Stirnfläche als Lichteinkoppelfläche und einer in Richtung einer Längsachse angeordneten, quer zur Längsachse abstrahlenden Lichtaustrittsfläche, der gegenüberliegend eine reflektierende Fläche angeordnet ist, die quer zur Längsachse eine Vielzahl lichtablenkender Prismen aufweist, deren einander zugewandten Flanken benachbarter Prismen direkt aneinander stoßen und einen Einschnittwinkel bilden, dessen Winkelhalbierende etwa senkrecht zu einer die Dachkanten der Prismen miteinander verbindenden Linie angeordnet sind.

Stabförmige Lichtleiter werden in Kraftfahrzeugen beispielsweise als Signalleuchte oder zur Beleuchtung von Anzeigeeinrichtungen verwendet.

Das US patent US 5 590 945 zeigt die Merkmale des Oberbegriffs des Anspruchs 1.

Aus der DE 41 29 094 A1 ist ein stabförmiger Lichtleiter bekannt, der eine quer zu seiner Längsrichtung abstrahlende Lichtaustrittsfläche aufweist, der gegenüberliegend eine reflektierende Fläche angeordnet ist. Die reflektierende Fläche weist eine Vielzahl von Prismen auf, die quer zur Längsachse des stabförmigen Lichtleiters angeordnet sind. Der stabförmige Lichtleiter ist im wesentlichen zylindrisch ausgebildet. Über eine der Stirnflächen des Lichtleiters wird Licht eingekoppelt, das nach Totalreflexion über die Prismen, die verspiegelt sind, radial ausgekoppelt wird.

Nachteilig bei diesem Lichtleiter ist, daß er über seine Länge nicht gleichmäßig ausleuchtet, da der eingekoppelte Lichtstrom mit der Entfernung von der eingekoppelten Fläche abnimmt.

Aus der EP 0 766 037 A1 ist ein stabförmiger Lichtleiter mit rechteckigem Querschnitt bekannt. Parallel zu seiner Längsachse ist eine quer zur Längsachse abstrahlende Lichtaustrittsfläche angeordnet. Der Lichtaustrittsfläche in einem Abstand gegenüberliegend ist eine reflektierende Fläche angeordnet, die quer zur Längsachse ein Sägezahnprofil aufweist. Durch das Sägezahnprofil wird eine Vielzahl von Prismen gebildet, die eine senkrecht zur Längsachse angeordnete erste Fläche und eine winklig zur Längsachse angeordnete reflektierende zweite Fläche aufweist. Parallel aus Richtung einer Einkoppelfläche eingekoppeltes Licht wird an der zweiten Fläche reflektiert und über die Lichtaustrittsfläche abgestrahlt. Der Abstand zwischen Lichtaustrittsfläche und reflektierender Fläche verringert sich in Richtung der Längsachse.

Nachteilig bei diesem bekannten Lichtleiter ist, daß die Prismen nur Licht aus einer Richtung günstig ablenken. Der Lichtstrom im Lichtleiter kann so nicht optimal genutzt werden.

Aufgabe der vorliegenden Erfindung ist es daher, die bekannten stabförmigen Lichtleiter so zu verbessern, daß mit einem möglichst geringem Lichtstrom eine optimale Lichtverteilung erzielt wird.

Die Aufgabe wird durch die Merkmale des Anspruchs 1 gelöst.

Dadurch, daß der Abstand zwischen Lichtaustrittsfläche und reflektierender Fläche in Richtung der Längsachse variiert, kann dem in Längsrichtung abnehmenden Lichtstrom im Sinne einer gleichmäßigen Ausleuchtung entgegengewirkt werden. Dadurch, daß mindestens zwei verschiedene Einschnittwinkel gebildet werden, können durch eine geeignete Wahl der Einschnittwinkel gezielte Lichtverteilungen in einer Ebene horizontal zur Längsachse des stabförmigen Lichtleiters aufgebaut werden.

So kann mit einem möglichst geringen Lichtstrom eine optimale Lichtverteilung erzielt werden.

Gemäß der Erfindung sind die verschiedenen Einschnittwinkel alternierend zueinander angeordnet.

Dadurch, daß die verschiedenen Einschnittwinkel nebeneinander bzw. alternierend angeordnet sind, läßt sich mit relativ einfacher Herstellung eine günstige Lichtverteilung erzielen.

Alternativ der zu bilden die einander zugewandten Flanken benachbarter Prismen mindestens jeweils zwei Teilflanken, so daß unterschiedliche Einschnittwinkel überlagert werden. Die Lichtverteilung kann so weiter optimiert werden und der Gesamtprismenverband kann hierbei beispielsweise einer e-Funktion oder sonstwie beliebig vorgegebenen Formen folgen.

Nach einer weiteren bevorzugten Ausführungsform der Erfindung wird die Lichtverteilung in den zur Längsachse senkrechten Ebenen durch verschiedene radiale Ausformungen der Dachkanten beeinflußt. Beispielsweise können die Dachkanten quer zur Längsachse um einen Mittelpunkt gebogen sein, quer zur Längsachse eine Freiform aufweisen oder quer zur Längsachse mindestens zwei Prismenflanken aufweisen.

Nach einer weiteren bevorzugten Ausführungsform der Erfindung weisen die Lichteinkoppelflächen eine flache konvexe Linse auf, deren Radius größer als der halbe Durchmesser des zylindrischen Lichtleiters ist.

Durch die vorgesetzte Linse, kann der eingekoppelte Lichtstrom bereits am Lichtleitereingang optimiert werden.

Weitere Einzelheiten der Erfindung ergeben sich aus der nachfolgenden ausführlichen Beschreibung in den beigefügten Zeichnungen, in denen bevorzugte Ausführungsformen der Erfindung beispielsweise veranschaulicht sind.

In den Zeichnungen zeigen:

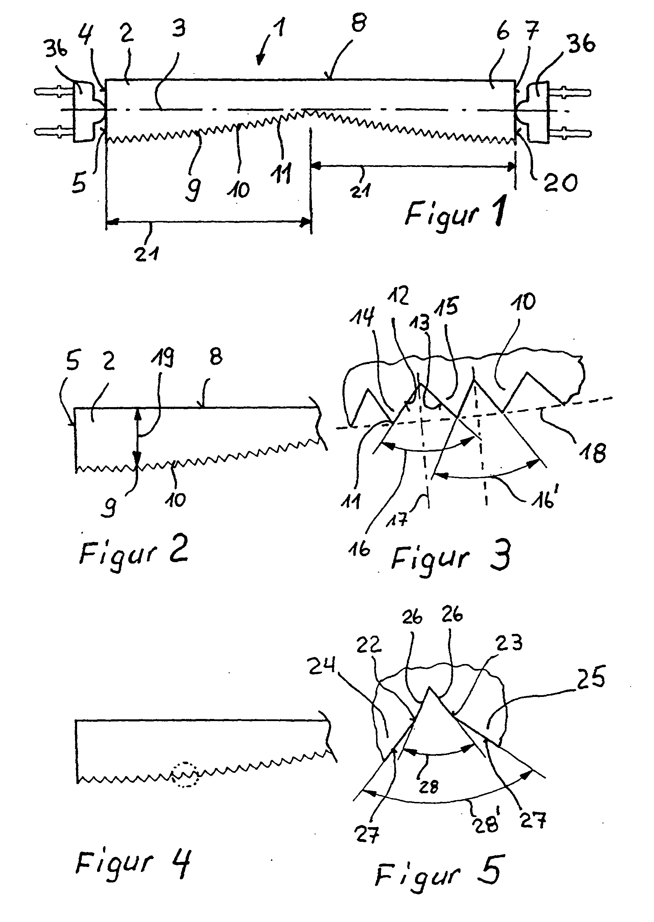

- Figur 1:: Eine Seitenansicht eines stabförmigen Lichtleiters in schematischer Darstellung,
- Figur 2:: eine Seitenansicht eines stabförmigen Lichtleiters, bei dem verschiedene Einschnittwinkel alternierend angeordnet sind,
- Figur 3:: eine vergrößerte Darstellung der reflektierende Fläche von Figur 2,

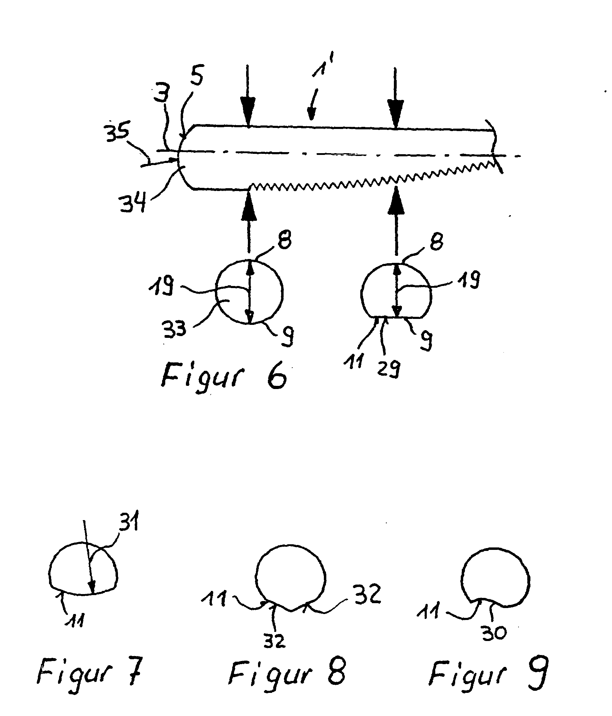

- Figur 4:: eine Seitenansicht eines stabförmigen Lichtleiters, bei dem unterschiedliche Einschnittwinkel überlagert sind,
- Figur 5:: eine vergrößerte Darstellung der reflektierenden Fläche von Figur 4,
- Figur 6:: eine Seitenansicht eines stabförmigen Lichtleiters mit angedeuteten Querschnitten,
- Figur 7:: einen Querschnitt durch einen stabförmigen Lichtleiter, dessen Prismen Dachkanten aufweisen, die quer zur Längsachse um einen Mittelpunkt gebogen sind,
- Figur 8:: einen Querschnitt durch einen stabförmigen Lichtleiter, dessen Prismen Dachkanten aufweisen, die quer zur Längsachse zwei Prismenflanken aufweisen, und
- Figur 9:: einen Querschnitt durch einen stabförmigen Lichtleiter, dessen Prismen Dachkanten aufweisen, die quer zur Längsachse eine Freiform aufweisen.

Der stabförmige Lichtleiter (1) weist an einem ersten Ende (2) eine quer zu seiner Längsachse (3) angeordnete erste Stirnfläche (4) auf, die als Lichteinkoppelfläche (5) ausgebildet ist. An seinem dem ersten Ende (2) gegenüberliegenden zweiten Ende (6) weist der stabförmige Lichtleiter (1) eine zweite Stirnfläche (7) auf, die ebenfalls quer zu der Längsachse (3) angeordnet ist.

Der stabförmige Lichtleiter (1) weist in Längsrichtung eine quer zu seiner Längsachse (3) abstrahlende Lichtaustrittsfläche (8) auf. Auf der der Lichtaustrittsfläche (8) gegenüberliegenden Seite des stabförmigen Lichtleiters (1) ist eine reflektierende Fläche (9) angeordnet. Die reflektierende Fläche (9) weist quer zur Längsachse (3) eine Vielzahl lichtablenkender Prismen (10) auf, deren Dachkanten (11) quer zur Längsachse (3) angeordnet sind. Die einander zugewandten Flanken (12, 13) benachbarter Prismen (14, 15) stoßen direkt aneinander und bilden einen Einschnittwinkel (16), dessen Winkelhalbierende (17) etwa senkrecht zu einer die Dachkanten (11) der Prismen (10) miteinander verbindenden Linie (18) angeordnet sind.

Der Abstand (19) zwischen Lichtaustrittsfläche (8) und reflektierender Fläche (9) variiert in Richtung der Längsachse (3), so daß der Abstand (19) von der Lichteinkoppelfläche (5) weg sich verringert. Bei einem stabförmigen Lichtleiter (1) mit nur einer Einkoppelfläche (5) weist der Abstand (19) im Bereich der zweiten Stirnfläche (7) seinen minimalen Wert auf. Bei einem stabförmigen Lichtleiter (1), bei dem die zweite Stirnfläche (7) als eine zweite Lichteinkoppelfläche (20) ausgebildet ist, weist der Abstand (19) seinen minimalen Wert (37) auf der halben Länge (21) zwischen Lichteinkoppelfläche (5) und zweiter Lichteinkoppelfläche (20) auf. Die Flanken (14, 15) benachbarter Prismen (14, 15) bilden verschieden große Einschnittwinkel (16, 16'), die alternierend nebeneinander angeordnet sind.

Nach einer anderen Ausführungsform der Erfindung weisen einander zugewandte Flanken (22, 23) benachbarter Prismen (24, 25) jeweils zwei Teilflanken (26, 27) auf, so daß unterschiedlich große Einschnittwinkel (28, 28') überlagert werden.

Die Dachkanten (11) der Prismen (10) können quer zur Längsachse (3) eine Gerade (29) bilden. Die Dachkanten (11) können quer zur Längsachse (3) aber auch eine Freiform (30) aufweisen, um einen Mittelpunkt gebogen sein bzw. einen Radius (31) aufweisen oder zwei Prismerlflanken (32) aufweisen.

Der Abstand (19) der Lichtaustrittsfläche (8) und reflektierende Fläche (9) variiert exponentiell, vorzugsweise nach einer e-Funktion. Es ist aber auch möglich, den Abstand (19) nach einer beliebig vorgebbaren Funktion zu variieren.

Der stabförmige Lichtleiter (1'), der einen im wesentlichen runden Querschnitt (33) aufweist, kann an seiner Lichteinkoppelfläche (5) eine flache konvexe Linse (34), die beispielsweise angeformt sein kann, aufweisen. Abhängig von der Abstrahlcharakteristik der verwendeten Lichtquelle weist die Linse einen Krümmungsradius (35) auf, der deutlich größer als der halbe Durchmesser des verwendeten zylindrischen Lichtleiters (1') ist.

An den Lichteinkoppelflächen (5, 20) wird beispielsweise Licht von Leuchtdioden (LED's) (36) oder von nicht dargestellten Lichtwellenleitem eingekoppelt und durch Totalreflexion weitergeleitet. Auf die Prismen (10) auftreffendes Licht wird reflektiert und tritt auf der den Prismen (10) gegenüberliegenden Lichtaustrittsfläche (8) aus.

## Patentansprüche

1. Stabförmiger Lichtleiter (1) für eine Beleuchtungseinrichtung für Kraftfahrzeuge mit mindestens einer Stirnfläche (4, 7) als Lichteinkoppelfläche und einer in Richtung einer Längsachse (3) angeordneten, quer zur Längsachse (3) abstrahlenden Lichtaustrittsfläche (8), der gegenüberliegend eine reflektierende Fläche (9) angeordnet ist, die quer zur Längsachse (3) eine Vielzahl lichtablenkender Prismen (10, 14, 15, 24, 25) aufweist, deren einander zugewandte Flanken (12, 13, 22, 23) benachbarter Prismen (14, 15, 24, 25) direkt aneinander stoßen und Einschnittwinkel bilden, wobei der Abstand (19) zwischen Lichtaustrittsfläche (8) und reflektierender Fläche (9) in Richtung der Längsachse (3) des Lichtleiters (1) variiert, so daß der Abstand (19) von der Lichteinkoppelfläche (5) weg sich verringert und wobei mindestens zwei verschiedene Einschnittwinkel (16, 16', 28, 28') gebildet werden, **dadurch gekennzeichnet, daß** die Einschnittwinkel (12, 13, 22, 23) Winkelhalbierende aufweisen, die etwa senkrecht zu einer die Dachkanten der Prismen (10, 14, 15, 24, 25) miteinander verbindenden Linie angeordnet sind, wobei etwa der verschiedene Einschnittwinkel (16, 16') alternierend nebeneinander angeordnet sind, oder die einander zugewandten Flanken (22, 23) benachbarter Prismen (24, 25) mindestens jeweils zwei Teilflanken (26, 27) bilden, die unterschiedliche Einschnittwinkel (28, 28') überlagern.

2. Stabförmiger Lichtleiter nach Anspruch 1, **dadurch gekennzeichnet, daß** die Prismen (10) Dachkanten (11) aufweisen, die quer zur Längsachse (3) eine Freiform (30) aufweisen.

3. Stabförmiger Lichtleiter nach Anspruch 1, **dadurch gekennzeichnet, daß** die Prismen (10) Dachkanten (11) aufweisen, die quer zur Längsachse (3) um einen Mittelpunkt gebogen sind.

4. Stabförmiger Lichtleiter nach Anspruch 1, **dadurch gekennzeichnet, daß** die Prismen (10) Dachkanten (11) aufweisen, die quer zur Längsachse (3) mindestens zwei Prismenflanken (32) aufweisen.

5. Stabförmiger Lichtleiter nach einem der Ansprüche 1 bis 4, **dadurch gekennzeichnet, daß** der Abstand (19) zwischen Lichtaustrittsfläche (8) und reflektierender Fläche (9) nach einer beliebig vorgebbaren Funktion variiert.

6. Stabförmiger Lichtleiter nach einem der Ansprüche 1 bis 5, **dadurch gekennzeichnet, daß** der Abstand (19) zwischen Lichtaustrittsfläche (8) und reflektierender Fläche (9) nach einer e-Funktion variiert.

7. Stabförmiger Lichtleiter nach einem der Ansprüche 1 bis 6, **dadurch gekennzeichnet, daß** die der Lichteinkoppelfläche (5) gegenüberliegende zweite Stimfiläche (7) als zweite Lichteinkoppelfläche (20) ausgebildet ist, und daß der auf der halben Länge (21) zwischen den Lichteinkoppelflächen (5, 20) angeordnete Abstand (19) von Lichtaustrittsfläche (8) und reflektierender Fläche (9) als kürzester Abstand (37) ausgebildet ist.

8. Stabförmiger Lichtleiter nach einem, der Ansprüche 1 bis 7, **dadurch gekennzeichnet, daß** die Lichteinkoppelflächen (5, 20) eine flache konvexe Linse (34) aufweisen, deren Krümmungsradius (35) größer als der halbe Durchmesser des zylindrischen Lichtleiters (1') ist.

## Claims

1. Rod-shaped light guide (1) for a lighting device for motor vehicles comprising at least one end face (4, 7) serving as a light-coupling surface and a light-exit surface (8) arranged in the direction of a longitudinal axis (3), emitting light transversely to the longitudinal axis (3) and opposite which a reflecting surface (9) provided transversely to the longitudinal axis (3) with a plurality of light-deflecting prisms (10, 14, 15, 24, 25) is arranged, the flanks (12, 13, 22, 23) of adjacent prisms (14, 15, 24, 25) directed towards one another abutting directly against one another and forming incision angles, wherein the distance (19) between the light-exit surface (8) and the reflecting surface (9) varies in the direction of the longitudinal axis (3) of the light guide (1) so that the distance (19) away from the light-coupling surface (5) decreases and wherein at least two different incision angles (16, 16', 28, 28') are formed, **characterised in that** the incision angles (12, 13, 22, 23) have bisectors arranged substantially perpendicularly to a line connecting the roof edges of the prisms (10, 14, 15, 24, 25) together, wherein either different incision angles (16, 16') are arranged alongside one another in alternation or the flanks (22, 23) of adjacent prisms (24, 25) directed towards one another form at least two partial flanks (26, 27) which superimpose different incision angles (28, 28').

2. Rod-shaped light guide according to claim 1, **characterised in that** the prisms (10) have roof edges (11) having a free form (30) transversely to the longitudinal axis (3).

3. Rod-shaped light guide according to claim 1, **characterised in that** the prisms (10) have roof edges (11) bent around a centre point transversely to the longitudinal axis (3).

4. Rod-shaped light guide according to claim 1, **characterised in that** the prisms (10) have roof edges (11) having at least two prism flanks (32) transversely to the longitudinal axis (3).

5. Rod-shaped light guide according to one of claims 1 to 4, **characterised in that** the distance (19) between the light-exit surface (8) and the reflecting surface (9) varies according to a predetermined function.

6. Rod-shaped light guide according to one of claims 1 to 5, **characterised in that** the distance (19) between the light-exit surface (8) and the reflecting surface (9) varies according to an exponential function.

7. Rod-shaped light guide according to one of claims 1 to 6, **characterised in that** the second end face (7) situated opposite the light-coupling surface (5) is designed as a second light-coupling surface (20) and that the distance (19) between the light-exit surface (8) and the reflecting surface (9) halfway (21) between the light-coupling surfaces (5, 20) is designed as the shortest distance (37).

8. Rod-shaped light guide according to one of claims 1 to 7, **characterised in that** the light-coupling surfaces (5, 20) have a flat convex lens (34), the radius of curvature (35) of which is greater than half the diameter of the cylindrical light guide (1').

## Revendications

1. Guide de lumière (1) en forme de barreau pour un système d'éclairage pour véhicules automobiles, comportant au moins une face frontale (4, 7) servant de surface de couplage de lumière et une surface de sortie de lumière (8) agencée en direction d'un axe longitudinal (3) et rayonnant transversalement à l'axe longitudinal (3), à l'opposé de laquelle est agencée une surface réfléchissante (9) qui présente transversalement à l'axe longitudinal (3) une pluralité de prismes (10, 14, 15, 24, 25) qui dévient la lumière, dont les flancs (12, 13, 22, 23) tournés les uns vers l'autre, de prismes voisins (14, 15, 24, 25) sont directement contigus et forment un angle inclus, la distance (19) entre la surface de sortie de lumière (8) et la surface réfléchissante (9) variant en direction de l'axe longitudinal (3) du guide de lumière (1), de telle sorte que la distance (19) se réduit en éloignement de la surface de couplage de lumière (5) et il est formé au moins deux angles inclus (16, 16', 28, 28') différents, **caractérisé en ce que** les angles inclus (12, 13, 22, 23) présentent des bissectrices qui sont agencées approximativement perpendiculairement à une ligne reliant les unes aux autres les arêtes de sommet des prismes (10, 14, 15, 24, 25), dans lequel
soit différents angles inclus (16, 16') sont agencés en alternance les uns à côté des autres,
soit les flancs (22, 23) tournés l'un vers l'autre, de prismes voisins (24, 25), forment chacun au moins deux flancs partiels (26, 27) qui superposent les différents angles inclus (28, 28').

2. Guide de lumière en forme de barreau selon la revendication 1, **caractérisé en ce que** les prismes (10) présentent des arêtes de sommet (11) qui présentent une forme dégagée transversalement à l'axe longitudinal (3).

3. Guide de lumière en forme de barreau selon la revendication 1, **caractérisé en ce que** les prismes (10) présentent des arêtes de sommet (11) qui sont pliées autour d'un centre transversalement à l'axe longitudinal (3).

4. Guide de lumière en forme de barreau selon la revendication 1, **caractérisé en ce que** les prismes (10) présentent des arêtes de sommet (11) qui présentent au moins deux flancs de prisme (32) transversalement à l'axe longitudinal (3).

5. Guide de lumière en forme de barreau selon l'une des revendications 1 à 4, **caractérisé en ce que** la distance (19) entre la surface de sortie de lumière (8) et la surface réfléchissante (9) varie selon une fonction librement prédéterminable.

6. Guide de lumière en forme de barreau selon l'une des revendications 1 à 5, **caractérisé en ce que** la distance entre la surface de sortie de lumière (8) et la surface réfléchissante (9) varie selon une fonction e.

7. Guide de lumière en forme de barreau selon l'une des revendications 1 à 6, **caractérisé en ce que** la deuxième surface frontale (7) opposée à la surface de couplage de lumière (5) est réalisée sous forme de deuxième surface de couplage de lumière (20), et **en ce que** la distance (19), agencée à demi-longueur (21) entre les surfaces de couplage de lumière (5, 20) est réalisée comme distance la plus courte (37) entre la surface de sortie de lumière (8) et la surface réfléchissante (9).

8. Guide de lumière en forme de barreau selon l'une des revendications 1 à 7, **caractérisé en ce que** les surfaces de couplage de lumière (5, 20) présentent une lentille (34) convexe plate dont le rayon de courbure (35) est plus grand que le demi-diamètre du guide de lumière (1') cylindrique.
